# EUROPÄISCHE PATENTSCHRIFT

(11) **EP 1 792 075 B1**
(45) Veröffentlichungstag und Bekanntmachung des Hinweises auf die Patenterteilung: **13.05.2009**
(21) Anmeldenummer: 05790045.8
(22) Anmeldetag: 20.09.2005
(51) Int. Cl.: F03D 7/02, F03D 7/04

(54) **VERFAHREN ZUR REGELUNG EINER WINDENERGIEANLAGE UND WINDENERGIEANLAGE**
METHOD FOR CONTROLLING A WIND POWER PLANT AND CORRESPONDING WIND POWER PLANT
PROCEDE DE REGULATION D'UNE INSTALLATION D'ENERGIE EOLIENNE, ET INSTALLATION D'ENERGIE EOLIENNE CORRESPONDANTE

(30) Priorität: 21.09.2004 DE 102004046036; 11.11.2004 DE 102004054608
(43) Veröffentlichungstag der Anmeldung: 06.06.2007
(60) Teilanmeldung: 09003468.7
(73) Patentinhaber: REpower Systems AG, 22297 Hamburg (DE)
(72) Erfinder: MATTHIAS, Schubert, 24768 Redensbrug (DE)
(74) Vertreter: Seemann, Ralph
(86) Internationale Anmeldenummer: PCT/EP2005/010125
(87) Internationale Veröffentlichungsnummer: WO 2006/032451

(56) Entgegenhaltungen:
- EP-A- 0 847 496
- EP-A- 1 230 479
- DE-A1- 19 844 258
- DE-B3- 10 300 733
- US-A- 4 161 658
- LEITHEAD W E ET AL: "ROLE AND OBJECTIVES OF CONTROL FOR WIND TURBINES" IEE PROCEEDINGS C. GENERATION, TRANSMISSION, DISTRIBUTION, INSTITUTION OF ELECTRICAL ENGINEERS. STEVENAGE, GB, Bd. 138, Nr. 2 PART C, 1. März 1991 (1991-03-01), Seiten 135-148, XP000219783 ISSN: 0143-7046

## Beschreibung

Die vorliegende Erfindung betrifft ein Verfahren zur Regelung einer Windenergieanlage gemäß dem Oberbegriff des Anspruchs 1 sowie eine Windenergieanlage gemäß dem Oberbegriff des Anspruchs 17.

Bekannte Verfahren werden in Windenergieanlagen eingesetzt, die einen Rotor mit wenigstens einem Rotorblatt aufweisen, wobei das Rotorblatt in einem einstellbaren Rotorblattwinkel zu dem Rotor angeordnet ist. Über die bekannten Verfahren wird innerhalb eines vorgegebenen Windgeschwindigkeitsbereichs die Rotordrehzahl unter Verstellung des Rotorblattwinkels zur Einstellung einer vorgegebenen Leistung geregelt.

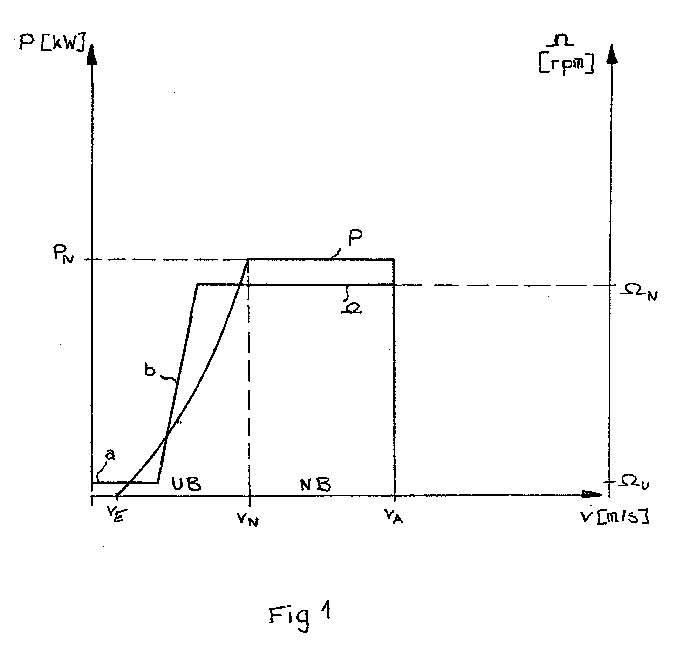

Zum besseren Verständnis soll im folgenden die Regelung einer Windenergieanlage anhand der in Fig 1 dargestellten Leistungs- bzw. Drehzahlkennlinie als Funktion der Windgeschwindigkeit erläutert werden.

Übliche Leistungs- und Drehzahlkennlinien, wie sie derzeit tatsächlich überwiegend in Windenergieanlagen abgefahren werden, weisen zwei Bereiche auf.

Der erste Bereich der Leistungs- bzw. Drehzahlkennlinie ist der untere Teillastbereich UB. Dieser beginnt bei der sogenannten Einschaltwindgeschwindigkeit v_{E} und endet bei der Nennwindgeschwindigkeit v_{N}. Die Einschaltwindgeschwindigkeit ist die Windgeschwindigkeit, bei der eine Windenergieanlage beginnt effektiv Leistung abzugeben. Bei Windgeschwindigkeiten, die unterhalb der Einschaltwindgeschwindigkeit v_{E} liegen, deckt die durch den Rotor erzeugte Leistung lediglich die benötigte Verlustleistung des Triebstrangs sowie den Eigenbedarf ab.

Im unteren Teillastbereich nimmt die Leistung bzw. die Drehzahl mit zunehmender Windgeschwindigkeit bis zum Erreichen der Nennwindgeschwindigkeit v_{N} zu. Dabei wird der Rotorblattwinkel im wesentlichen konstant gehalten und die Drehzahl über das drehzahlabhängige Drehmoment geregelt bzw. gesteuert. Die Leistung stellt sich abhängig von der vom Rotor windgeschwindigkeitsabhängig aufgenommenen Windenergie ein. In dem unteren Teillastbereich weist die Drehzahlkennlinie zwei Abschnitte a und b auf, wobei der Abschnitt a entlang der unteren Drehzahlgrenze Ωᵤ als Plateau ausgebildet ist. In dem zweiten Abschnitt b wird die Drehzahl in Abhängigkeit der Windgeschwindigkeit linear gesteigert (Betrieb mit der optimalen Schnelllaufzahl) bis mit der Nenndrehzahl die obere Drehzahlgrenze erreicht wird. Das Erreichen der Nenndrehzahl kann bei der Nennwindgeschwindigkeit erfolgen, zumeist wird die Nenndrehzahl aber bereits vorher erreicht.

Die Nennwindgeschwindigkeit v_{N} ist die Windgeschwindigkeit bei der die Leistung der Windenergieanlage erstmals der sogenannten Nennleistung der Windenergieanlage entspricht.

Der zweite Bereich der Leistungs- bzw. Drehzahlkennlinie ist der sogenannte Nennleistungsbereich NB. Der Nennleistungsbereich beginnt bei der Nennwindgeschwindigkeit v_{N} und endet bei der Abschaltwindgeschwindigkeit v_{A}, wobei innerhalb des Nennleistungsbereiches die Rotordrehzahl unter Verstellung des Rotorblattwinkels zur Einstellung einer Nennleistung geregelt wird. Die Abschaltwindgeschwindigkeit v_{A} ist die höchste Windgeschwindigkeit bei der die Anlage mit Leistungsabgabe betrieben werden darf. Der normale Betrieb einer Windenergieanlage, bei dem die Nennleistung über die Verstellung des Rotorblattes geregelt wird, ist bei höheren Windgeschwindigkeiten als der Abschaltwindgeschwindigkeit nicht möglich, da es dann aufgrund der zusätzlich wirkenden starken mechanischen Belastung zu einer Schädigung oder sogar einer Zerstörung der Anlage kommen würde. Der Standard ist daher momentan, Windenergieanlagen bei Erreichen einer Abschaltwindgeschwindigkeit abzuschalten.

Im allgemeinen wird die Leistung von Windenergieanlagen in öffentliche Netze eingespeist. Das abrupte Abschalten von Windenergieanlagen bei Abschaltwindgeschwindigkeiten kann aber, besonders in Gebieten mit vielen Windenergieanlagen zu Spannungs- bzw. Frequenzeinbrüchen im öffentlichen Netz führen. Angestrebt ist daher, dass das Abschalten der Anlage nicht abrupt erfolgt, sondern durch langsame Reduzierung der Leistung.

Mit einer Reduzierung der Leistung kann neben der Netzverträglichkeit weiterhin erreicht werden, dass die Anlage trotz des Überschreitens der Abschaltwindgeschwindigkeit weiterbetrieben werden kann, ohne dass die Anlage aufgrund der mit zunehmender Windgeschwindigkeit steigenden mechanischen Lasten geschädigt wird.

Ein Verfahren, bei dem die Leistung und die Betriebsdrehzahl ab Erreichen einer Abschaltwindgeschwindigkeit in Abhängigkeit von der Windgeschwindigkeit geregelt wird, ist z. B. aus der EP 0 847 496 B1 bekannt.

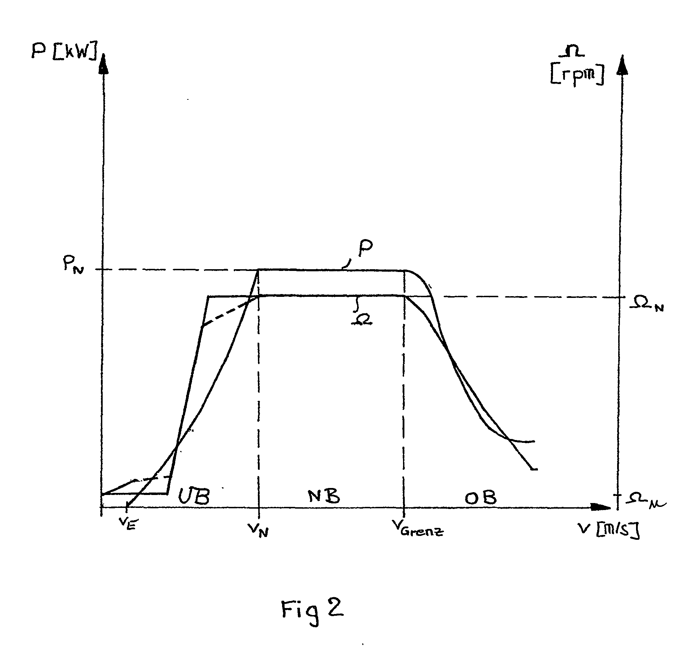

In der Fig. 2 sind beispielhaft eine Leistungs- bzw. Drehzahlkennlinie gemäß diesem bekannten Verfahren dargestellt, die gegenüber den oben diskutierten Kennlinien zusätzlich einen dritten Bereich, den oberen Teillastbereich OB, aufweisen.

Dieser beginnt mit dem Erreichen einer Grenzwindgeschwindigkeit v_{Grenz} ,welche im wesentlichen der bisherigen Abschaltwindgeschwindigkeit entspricht.

Auch aus der DE 198 44 258 A1 ist ein Verfahren bekannt, über das die Leistung bei Erreichen einer vorgegebenen Windgeschwindigkeit reduziert wird. Jedoch wird die Leistungsreduktion bereits bei Erreichen einer Windgeschwindigkeit eingeleitet, die unterhalb der Abschaltwindgeschwindigkeit liegt.

Beiden aus dem Stand der Technik bekannten Verfahren ist gemein, dass die Regelung der Leistung in dem oberen Teillastbereich ab Erreichen einer vorgegebenen Grenzwindgeschwindigkeit in Abhängigkeit von der gemessenen ansteigenden Windgeschwindigkeit erfolgt. In der Praxis ist die Umsetzung der Regelung der Anlage im oberen Teillastbereich in Abhängigkeit von gemessenen Windgeschwindigkeiten aber als äußerst problematisch anzusehen.

Das Betreiben einer Windenergieanlage in einem oberen Teillastbereich bedeutet, dass die Windenergieanlage aufgrund hoher Windgeschwindigkeiten hohen Belastungen ausgesetzt ist. Dies liegt unter anderem darin begründet, dass die Luftströmung nicht stationär sondern turbulent ist. Turbulenz bedeutet, dass die Geschwindigkeit, mit der der Wind auf die Rotorfläche trifft, nicht an jeder Stelle des Rotors gleich ist, sondern dass die Windenergie über die gesamte Rotorfläche unterschiedlich verteilt ist. Das heißt, an einem oder mehreren Bereichen des Rotors können extrem hohe Windkräfte angreifen. Gleichzeitig können an einem anderen Bereich oder mehreren anderen Bereichen des Rotors wiederum nur sehr geringe oder auch gar keine Windkräfte angreifen, so dass die Anlage bei hoher Turbulenz sehr starken Wechsellasten ausgesetzt ist, die sofort oder auf Dauer die Anlage schädigen können. Die Energieschwankungen und somit auch die Wechsellasten sind bei großen Windgeschwindigkeiten besonders groß.

Für eine Leistungs- bzw. Drehzahlregelung im oberen Teillastbereich ist es daher wünschenswert, dass neben der Berücksichtigung der Kraft des Windes auch die oben beschriebenen Wechsellasten in diesen Windgeschwindigkeitsbereichen aufgrund der Turbulenz berücksichtigt werden.

Folglich ist es für den Einsatz der bekannten Verfahren erforderlich, dass die gemessene, der Regelung zugrunde gelegte Windgeschwindigkeit die tatsächlich vorherrschenden Windverhältnisse widerspiegelt. Bislang gibt es jedoch kein praxisorientiertes Verfahren mit dem eine solche Windgeschwindigkeit verlässlich ermittelt werden kann.

Es ist bekannt, die Messung der Windgeschwindigkeit mittels eines Gondelanemometers durchzuführen. Hierbei handelt es sich aber zum einen um ein bekanntermaßen relativ ungenaues Messverfahren, da die Messung durch den Windrotor stark verfälscht wird. Der Einflussbereichs des Rotors liegt mindestens einen Rotordurchmesser vor und 3 Rotordurchmesser hinter dem Rotor. Aufgrund dessen ist eine ungestörte Messung nicht möglich. Zum anderen ist es mit diesem Messverfahren nur möglich, die Windverhältnisse für einen punktförmigen Bereich des Windfeldes zu erfassen. Es ist mit diesem bekannten Verfahren jedoch nicht möglich, die tatsächlich über den gesamten Rotor vorherrschende turbulente Windgeschwindigkeit wiederzugeben.

Aus mehreren Veröffentlichungen, z. B. der WO 2004/077068 A1 oder der DE 101 37 272 A1 ist es bekannt, zur dreidimensionalen Messung der Windverhältnisse vor der Windenergieanlage sogenannte LIDAR- oder SODAR-Systeme einzusetzen. Dies wird insbesondere in Zusammenhang mit Windparks als sinnvoll beschrieben.

Diese Systeme werden bislang nur vereinzelt in der Praxis eingesetzt, da sie noch nicht ausreichend getestet sind. Weiterhin sind LIDAR- und SODAR-Systeme sehr teuer und es ist daher aus Kostengründen bislang nicht vorstellbar jede Windenergieanlage mit einem solchen System auszurüsten, so dass ein Einsatz dieser Systeme zur Erfassung der tatsächlichen Windverhältnisse bislang nicht durchführbar ist.

US-A-4 161 658 offenbart eine Windturbine für die Produktion von elektrischer Energie, wobei ein Steuersystem vorgesehen ist, das automatisch den Blattwinkel eines Rotorblattes verändert, wodurch die elektrische Ausgangsleistung reguliert wird.

Aus der EP 1 230 479 B1 ist weiterhin ein Verfahren bekannt, bei dem die mechanische Belastung der Rotorblätter über in den Rotorblättern angeordneten Sensoren ermittelt und die ermittelten Belastungswerte z. B. auch für die Regelung der Anlage genutzt werden können. Die Fig. 2 der EP 1 230 479 B1 zeigt ein Diagramm, bei dem die Leistung über der Windgeschwindigkeit dargestellt ist und die Fig. 3 der EP 1 230 479 B1 zeigt ein Diagramm bei dem die gemessenen Blattbelastungen über der Windgeschwindigkeit dargestellt sind.

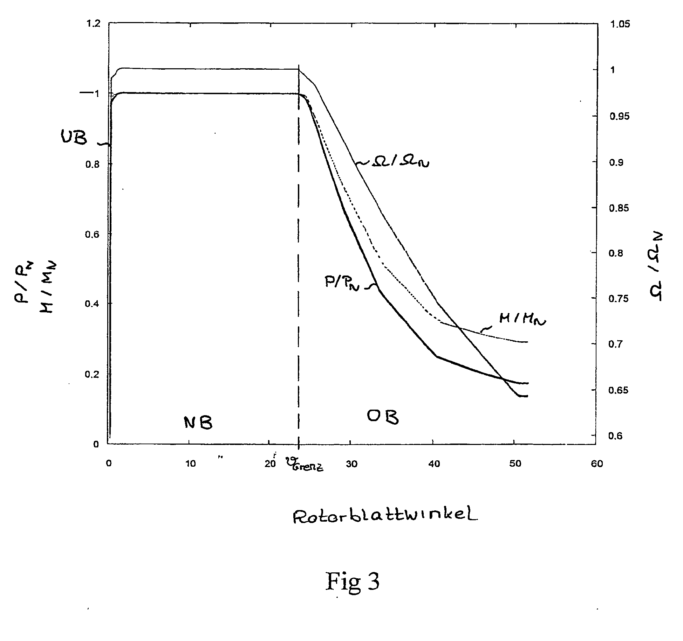

Wie den Fig. 2 und Fig. 3 der EP 1 230 479 B1 zu entnehmen ist, weist die Blattbelastung in dem Windgeschwindigkeitsbereich, in dem gemäß Fig. 2 der EP 1 230 479 B1 mit einer Reduzierung der Leistung begonnen werden müsste, einen plateauförmigen Verlauf auf. Das bedeutet, dass die mechanischen Belastungen der Rotorblätter durch die Verstellung der Rotorblattwinkel und der damit verbundenen Reduzierung der Windangriffsfläche der Rotorblätter im Mittel im wesentlichen konstant bleiben. Aufgrund dessen kann die Blattbelastung nicht als Führungsgröße zur Steuerung des Abregelns der Leistungs- oder Drehzahlkennlinie in dem oberen Teillastbereich genutzt werden, da solch eine Regelung nur mit einer, deutlichen Veränderung der mittleren Blattbelastung funktioniert und dies gemäß der Fig. 3 nicht gegeben ist. Kurzzeitige Belastungsspitzen können zwar zur Regelung des Windrades genutzt werden um z. B. sicherzustellen, dass die Blattspitzen der Rotorblätter nicht mit dem Turm kollidieren. Eine Regelung der Leistung oder Drehzahl anhand von Lastspitzen ist jedoch nicht vorteilhaft, da die Leistung aus

Gründen der Netzverträglichkeit und die Drehzahl aufgrund der großen Massenträgheit eines Windrotors nur langsam verändert werden können, die Lastspitzen dann aber schon lange abgeklungen sind.

Aufgrund dessen bietet dieses Verfahren lediglich eine Möglichkeit, die mechanische Belastung der Rotorblätter im oberen Teillastbereich zu erfassen und die ermittelten Daten bei der Regelung im oberen Teillastbereich zu berücksichtigen. Eine ausführbare Regelung der Anlage im oberen Teillastbereich aufgrund der ermittelten Belastungswerte ist jedoch nicht offenbart, so dass auch bei dem Verfahren der EP 1 230 479 die Regelung im oberen Teillastbereich nur in Abhängigkeit von der Windgeschwindigkeit erfolgen kann.

Eine Zusammenfassung der oben beschriebenen Verfahren ergibt, dass es bislang bekannt ist, die Leistung bzw. die Drehzahl im oberen Teillastbereich in Abhängigkeit von der Windgeschwindigkeit zu regeln. Da es aber bislang ohne hohen Kosten zu produzieren nicht möglich ist, eine Windgeschwindigkeit zu ermitteln, welche die tatsächlichen Windverhältnisse widerspiegelt, weisen die oben beschriebenen Verfahren den großen Nachteil auf, dass sie in der Praxis nur schwer zu realisieren sind.

Es ist mit dem bekannten Stand der Technik bislang nicht gelungen, ein Verfahren zu finden, das insbesondere für eine Multimegawattanlage den leistungsreduzierten Anlagenbetrieb in einem Windgeschwindigkeitsbereich zwischen z.B. 25 und 35 m/s oder 25 und 40 m/s ermöglicht, ohne dass eine Erhöhung der Belastungen der Windenergieanlage wirksam ausgeschlossen werden kann. Insbesondere bei hohen Windgeschwindigkeiten, bei denen Schwankungen der Windgeschwindigkeit mit großen Schwankungen der einfallenden Energie verbunden sind, sind die aus dem Stand der Technik bekannten Regelalgorithmen zudem sehr schwingungsanfällig. Aus diesem Grunde sind die oben genannten Verfahren bislang auch kaum in der Praxis eingesetzt worden.

Die Leistungs- bzw. Drehzahlreduzierung sollte daher nicht aufgrund der gemessenen Windgeschwindigkeit erfolgen, sondern aufgrund einer Eingangsgröße, die einerseits physikalisch und steuerungstechnisch leichter zu erfassen ist und andererseits ein besseres Signal für die Anlagenbelastung darstellt.

Aufgabe der vorliegenden Erfindung ist die Schaffung eines verbesserten und zuverlässigeren Verfahrens zur Regelung einer Windenergieanlage ab dem Erreichen eines definierten Grenzwertes sowie zur Verbesserung der Netzverträglichkeit.

Gelöst wird die Aufgabe mit einem Verfahren zur Regelung einer Windenergieanlage, das die Merkmale des Anspruchs 1 aufweist sowie einer Windenergieanlage, welche die Merkmale des Anspruchs 17 aufweist.

Bei dem vorgeschlagenen Verfahren zur Regelung einer Windenergieanlage wird der Rotor im, auf einen unteren Teillastbereich folgenden Nennleistungsbereich bis zum Erreichen eines definierten Grenzwertes mit einer im wesentlichen konstant gehaltenen Nennleistungsdrehzahl betrieben. Bei Überschreiten des Grenzwertes wird der Rotor in einem oberen Teillastbereich durch eine Reduzierung der Rotordrehzahl unterhalb der Nennleistungsdrehzahl betrieben.

Unter dem Begriff Nenndrehzahl ist die Drehzahl zu verstehen, bei der die Windenergieanlage ihre Nennleistung bei Nennwindgeschwindigkeit erreicht. Demgegenüber wird mit der Nennleistungsdrehzahl eine Rotordrehzahl bezeichnet, bei der die Windenergieanlage Nennleistung liefern kann. Die Nennleistungsdrehzahl ist nicht notwendigerweise identisch mit der Nenndrehzahl, sondern kann einen Wert aufweisen, der in der Umgebung der Nenndrehzahl angeordnet ist. Dieser Bereich umfasst üblicherweise, aber nicht beschränkend, etwa +/- 10% der Nenndrehzahl.

Erfindungsgemäß ist vorgesehen, dass ab dem Erreichen des Grenzwertes die Rotordrehzahl und über eine vorgebbare Sollfunktion der Sollwert der Rotordrehzahl in Abhängigkeit vom Rotorblattwinkel geregelt werden.

Die vorliegende Erfindung bietet den Vorteil, dass die Regelung nach dem Überschreiten eines Grenzwertes als Eingangsgröße für die Regelung der Rotordrehzahl nicht, wie aus dem Stand der Technik bekannt, die gemessene Windgeschwindigkeit benutzt, deren Messungen, wie bereits erklärt, erheblichen Schwierigkeiten unterworfen ist, sondern den Rotorblattwinkel, der in einfacher Weise ermittelt werden kann. Anstatt der Rotordrehzahl kann für das erfindungsgemäße Verfahren vollkommen gleichwertig die Generatordrehzahl genutzt werden.

Der Erfindung liegt weiterhin die Erkenntnis zugrunde, dass der eingestellte Rotorblattwinkel eine erheblich bessere Information über den Belastungszustand der Anlage liefert als die gemessene Windgeschwindigkeit. Dies liegt darin begründet, dass die Einstellung eines Blattwinkels in Abhängigkeit von der Rotorleistung und Rotordrehzahl erfolgt und somit über einen eingestellten Blattwinkel nicht nur die Windgeschwindigkeit widergespiegelt wird, sondern dass auch weitere Faktoren mit berücksichtigt werden, wie z. B. die aktuelle Windrichtung, die Luftdichte, die vertikalen und horizontalen Windgradienten, die Windturbulenz, die Maschinendynamik etc..

Ein eingestellter Rotorblattwinkel spiegelt daher die von dem Rotor über die gesamte Rotorfläche integriert aufgenommene Windenergie wider, wohingegen die mit einem Anemometer gemessene Windgeschwindigkeit lediglich das Energieangebot eines Punktes des Windfeldes im Bereich des Anemometers wiedergibt.

Entsprechend kann es aufgrund der komplexen physikalischen Verhältnisse entgegen der lang verbreiteten Lehrmeinung auch keinen eindeutigen Zusammenhang zwischen einer gemessenen Windgeschwindigkeit und dem Rotorblattwinkel geben. Dies wurde auch durch Messungen bestätigt.

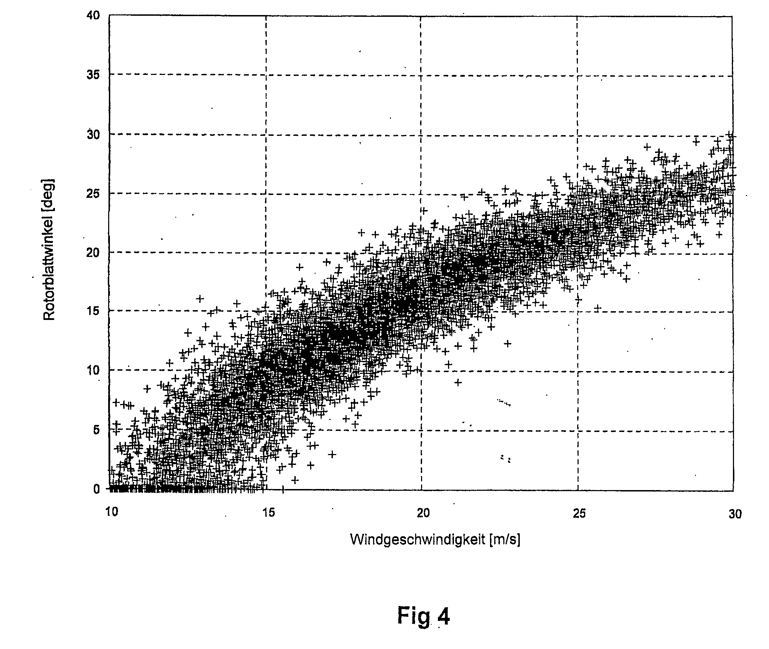

Zur Verdeutlichung des oben gesagten, soll an dieser Stelle auf die Fig. 4 verwiesen werden. Die Fig. 4 zeigt die Auftragung einer Vielzahl von Rotorblattwinkeln in Abhängigkeit von Windgeschwindigkeiten, wie sie im Normalbetrieb einer Windenergieanlage bei turbulentem Wind gemessen werden.

Wie dieser Darstellung zu entnehmen ist, kann einem Blattwinkel von z. B. 15deg sowohl eine Windgeschwindigkeit von 13m/s zugeordnet werden, als auch einer Windgeschwindigkeit von 26m/s oder auch einem beliebigen Wert zwischen diesen beiden Windgeschwindigkeiten. Die große Streuung der Messwerte ist neben den oben aufgezählten Faktoren auch darauf zurückzuführen, dass es sich bei der Regelung einer Windenergieanlage um stark dynamische Vorgänge handelt, welche aber für den aktuellen Belastungszustand von großer Bedeutung sind.

Die Fig. 4 bestätigt somit, dass es tatsächlich keinen eindeutigen Zusammenhang zwischen Windgeschwindigkeit und Blattwinkel gibt, sondern lediglich einen Zusammenhang mit grober Korrelation, der für eine exakte Regelung, wie sie für die Leistungsabgabe einer großen Windenergieanlage im oberen Teillastbereich aber erforderlich ist, nicht ausreicht.

Weiterhin verdeutlicht die Figur 4, dass aus diesem Grunde der Blattwinkel einen deutlich besseren Eingangsparameter als die Windgeschwindigkeit darstellt, da es sich hierbei um einen Parameter handelt, dessen Wert in einfacher Weise ermittelbar ist, wohingegen die Windgeschwindigkeit über die Rotorfläche starke Schwankungen aufweisen kann.

Da der Zweck einer Regelung der Anlage im oberen Teillastbereich darin besteht, dass ein Betrieb der Anlage auch bei hohen Windgeschwindigkeiten möglich ist, ohne die Anlage durch Überlastung zu gefährden, ist die Berücksichtigung der oben genannten Parameter, wie Windrichtung, Windturbulenz etc. unbedingt erforderlich. Diese wird durch die vorliegende Erfindung auf verblüffend einfache Weise durch eine blattwinkelabhängige Regelung im oberen Teillastbereich ermöglicht.

Ein Teil der oben genannten Einflüsse kann sicherlich durch ausreichend lange Mittelung der Windgeschwindigkeit eliminiert werden. Wie weiter unten noch ausführlicher dargestellt wird, reduziert eine 15 sec Mittelwertbildung die Schwankungen jedoch nur unwesentlich und mehrminütige Mittelungszeiten, wie zur Herstellung einer halbwegs akzeptablen Korrelation erforderlich wären, würde die Regelung nur unerwünscht träge machen.

Einflüsse, wie z. B. der Luftdichteeffekt, führen zu jahreszeitlich bedingten Schwankungen. So ist z. B. bekannt, dass an Standorten mit starken Temperaturschwankungen zwischen Winter und Sommer auch erhebliche Luftdichteschwankungen auftreten können, die direkt in die Belastung der Windenergieanlage eingehen. Durch eine Leistungsreduktion in Abhängigkeit vom Blattwinkel wird dieser Effekt voll berücksichtigt. Außerdem wird vorteilhaft die erfahrungsgemäß fehlerträchtige Anpassung der betreffenden Regelparameter an die höhenabhängige mittlere Standortluftdichte, welche z. B. bei Gebirgsstandorten erforderlich ist, vermieden.

Um die genannten Effekte noch besser zu erfassen, wird bei modernen Windenergieanlagen der Blattwinkel häufig nicht nur in Abhängigkeit der Rotorleistung und Rotordrehzahl geregelt, also von physikalischen Größen, welche im weiteren Sinne die Integration der dem Wind über die gesamte Rotorfläche entnommenen Energie darstellen, sondern der Blattwinkel kann auch abhängig von gemessenen oder rechnerisch ermittelten (geschätzten) Belastungen geregelt werden.

Das erfindungsgemäße Verfahren sieht vor, dass die Betriebsführung den Rotorblattwinkel permanent überwacht. Unterhalb des Grenzwertes regelt der Betriebsführungsrechner die Drehzahl so, dass ein optimaler Energieertrag erzielt wird, d.h. der Rotor wird mit dem günstigsten Drehzahlsollwert des Betriebsbereiches betrieben. Die Einhaltung der Solldrehzahl erfolgt üblicher Weise durch eine Kombination aus Blattverstellung und Generatormoment- bzw. Leistungsregelung und ist im Stand der Technik hinreichend genau beschrieben. Ab dem Erreichen des Grenzwertes wird über eine vorgebbare Sollfunktion der Sollwert der Rotordrehzahl in Abhängigkeit von dem Rotorblattwinkel abgesenkt, dass heißt die Nennleistungsdrehzahl wird verlassen. Bei der bislang beschriebenen Drehzahlregelung handelt es sich immer um die Vorgabe eines Drehzahlsollwertes, welcher z. B. als Reglereingang für die Regelung der Blattverstellung genutzt wird. Böen oder Negativböen führen aber, wie im normalen Betrieb unterhalb des Grenzwerts, weiterhin zu dynamischen Schwankungen um die Solldrehzahl herum, welche dann durch dynamische Verstellung des Blattwinkels und evtl. des Generatormomentes korrigiert werden müssen.

Wie im Stand der Technik bei einem Betrieb der Anlage im Nennleistungsbereich bekannt, erfolgt die Regelung der Drehzahl weiterhin im wesentlichen durch Verstellung des Blattwinkels, d.h. abhängig von der Drehzahlabweichung (Solldrehzahl-Istdrehzahl) wird der Blattwinkel verändert, um die Solldrehzahl einzuhalten. Es handelt sich hier also um einen klassische Regelkreis mit einfacher Signalrückführung.

Beim Betrieb im oberen Teillastbereich erfolgt gemäß der vorliegenden Erfindung ebenfalls die Regelung der Drehzahl durch die Verstellung des Blattwinkels. Zusätzlich wird jedoch die Solldrehzahl abhängig vom Blattwinkel gesteuert, d.h. nicht nur der Blattwinkel wird abhängig von der Drehzahlabweichung verändert, sondern jede Veränderung des Blattwinkels führt gleichzeitig zu einer Veränderung der Drehzahlabweichung (durch die Veränderung der Solldrehzahl). Da die Drehzahlabweichung für die Regelung des Blattwinkels verwendet wird, führt die Veränderung der Solldrehzahl auch zu einer nachfolgenden Änderung des Blattwinkels. Bildlich gesprochen entspricht die Änderung der Solldrehzahl einer Änderung des Regelziels. In sofern handelt es sich hier um eine doppelte Signalrückführung. Simulationen und Messungen an Prototypen zeigen dass dieser Regelkreis stabil zu betreiben ist und dass das erfindungsgemäße Verfahren bei geeigneter Wahl der Parameter problemlos arbeitet.

Die Reduzierung der Rotordrehzahl erfolgt über eine Sollfunktion (Drehzahl über Blattwinkel) z. B. in Form einer Tabelle oder einer mathematischen Funktion, die unter Berücksichtigung der aerodynamischen Rotorverhältnisse und Belastungen ermittelt wird. Um optimale Ergebnisse zu erzielen, ist es daher erforderlich, dass die Sollfunktion für jeden Blatttyp und für jede Anlagenversion iterativ ermittelt wird, entweder durch Computer-Simulationsrechnungen oder durch Feldversuche, welche allerdings sehr langwierig sind.

Eine besonders vorteilhafte Ausführungsform der Erfindung sieht daher vor, dass die Sollfunktion Drehzahl über Blattwinkel durch Simulationsrechnungen unter Berücksichtigung der Anlagenbelastungen bei turbulenten Windbedingungen ermittelt und/oder optimiert wird.

Ein Verfahren zur Ermittlung bzw. Optimierung der Drehzahl-Blattwinkelkennlinie der erfindungsgemäßen Regelung einer Windenergieanlage, sieht hierbei vor, dass das Verhalten der Regelung insbesondere mit turbulenten Windzeitreihen untersucht wird, welche positive Windgeschwindigkeitssprünge enthält, d. h., dass die mittlere Windgeschwindigkeit von z.B. 26m/s plötzlich auf 35m/s ansteigt. In diesen Fällen ist die Überlastungsgefahr der Windturbine besonders groß.

Übersteigen die hierbei auftretenden Belastungen die zulässigen Belastungen, so sind die Drehzahl-Blattwinkelkennlinie, die Regelparameter und/oder der Regelalgorithmus zu verändern. Alternativ kann natürlich auch nachgewiesen werden, dass alle Komponenten der Maschine den erhöhten Belastungen standhalten.

In Simulationsrechnungen für eine 5 Megawatt-Anlage hat sich hierbei herausgestellt, dass die Rotordrehzahl im Bereich des Grenzwerts relativ schnell reduziert werden muss, um die Belastungen im zulässigen Bereich zu halten. Um die Leistung nicht ebenfalls stark abfallen zu lassen, muss zusätzlich das Generatordrehmoment gegenüber dem aus dem unteren Teillastbetrieb bekannten drehzahlabhängigen Verhalten angehoben werden. Diese zunächst aufwendigere Vorgehensweise bietet aber im Endeffekt den Vorteil, dass die Regelung so gestaltet werden kann, dass auftretende Belastungen nicht höher als im Fall der Anlagenabschaltung bei Erreichen des Grenzwerts werden bzw. besser ausgeregeit werden können und somit z. B. die Betriebsfestigkeit der Anlage erhöht werden kann und trotzdem ein aus den Gründen der Netzverträglichkeit wünschenswertes langsames Abfallen der Leistung realisierbar ist.

Als Grenzwert kann z. B., wie aus dem Stand der Technik bekannt, eine definierte Abschaltwindgeschwindigkeit eingesetzt werden. Wie bei der Diskussion des Standes der Technik ausführlich erläutert, stellt aber Erfassung der tatsächlich vorherrschenden Abschaltwindgeschwindigkeit ein großes Problem dar.

Gemäß einer vorteilhaften Ausgestaltung der Erfindung kann auch ein definierter Rotorblattgrenzwinkel als Grenzwert eingesetzt werden, wie es z. B. in der DE 103 00 733 B3 beschrieben wird.

Gemäß einer weiteren vorteilhaften Ausgestaltung der Erfindung wird der Rotorblattwinkel als zeitlicher Mittelwert aus mehreren Rotorblattwinkeln gebildet, wobei durch die Wahl der Mittelungszeit die Regelqualität stark beeinflusst werden kann. Die optimale Mittelungszeit ist abhängig von der Energieverteilung des turbulenten Windes und sollte bei üblichen europäischen Standorten vorzugsweise zwischen 2 - 120s, besonders vorteilhaft zwischen 10 und 60 Sekunden liegen.

Bei einer Multimegawattanlage mit 5MW Leistung hat sich die Verwendung eines gleitenden 15sec-Mittelwerts sowohl in Hinsicht auf die gewünschte Regelungsstabilität, als auch hinsichtlich der Einhaltung der zulässigen Anlagenbelastungen als besonders vorteilhaft herausgestellt. Zur Optimierung des Regelalgorithmus kann die gleitende Mittelung steuerungsintern durch ein PT₁-Glied mit einer Zeitkonstanten von etwa 7,7 sec angenähert werden.

Da bei modernen Windturbinen die Rotorblätter einzeln verstellt werden können, ist der Blattwinkel nicht nur zeitlich, sondern auch örtlich zu mitteln, dass heißt es wird auch ein Mittelwert der einzelnen Rotorblattwinkel gebildet. Hierbei sind sowohl für die zeitliche als auch für die örtliche Mittelung nicht nur arithmetische Mittelwerte, sondern jegliche andere mathematische Mittelwertbildung, wie z.B. geometrische Mittelwerte, vorgesehen.

Das in der oben genannten EP 1 230 479 B1 vorgeschlagene Verfahren zur Blattregelung mit gemessenen Lasten sowie auch eine Regelung mit sogenannten Belastungsschätzern (load estimator) führt in Verbindung mit dem erfindungsgemäßen Verfahren zu besonders vorteilhaften Synergieeffekten. Der Begriff Anlagenbelastung umfasst hier sowohl die Beanspruchungen als auch die Verformungen.

Gemäß einer weiteren vorteilhaften Ausgestaltung der Erfindung kann das Generatormoment des in der Windenergieanlage angeordneten Generators oberhalb des Grenzblattwinkels in Abhängigkeit von der Rotordrehzahl eingestellt werden, wobei gemäß einer weiteren vorteilhaften Ausgestaltung der Erfindung das Generatormoment mit abnehmender Rotordrehzahl reduziert werden kann.

Bekannte Windenergieanlagen weisen einen Umrichter auf, der so ausgebildet ist, dass die Anlage drehzahlvariabel betrieben werden kann. Wird die Rotordrehzahl (bzw. die Generatordrehzahl) abgesenkt, ist der Umrichter in der Regel nicht in der Lage, dass Generatormoment in der Größe des Nennmomentes aufrecht zu erhalten. Abhängig von der Umrichterauslegung ist daher das Generatormoment ebenfalls drehzahlabhängig abzusenken. Dies kann ebenfalls durch Vorgabe einer Tabellenfunktion oder einer math. Funktion erzielt werden, wie es bereits für den unteren Teillastbetrieb im Bereich der optimalen Schnelllaufzahl üblich ist.

Naheliegend ist dabei der Ansatz, den für den unteren Teillastbereich verwendeten Zusammenhang, der häufig in Form einer Tabellenfunktion, dem sogenannten "look-up table", in der Steuerung festgehalten ist, zu verwenden.

Die aus Belastungsgründen erforderliche Drehzahlkennlinie würde jedoch in Verbindung mit der Teillast-Drehmomentkennlinie zu einer ungewünscht starken Leistungsreduzierung im Bereich des Grenzblattwinkels führen. Somit ist für die gewünschte sanfte und gleichmäßige Leistungsreduzierung von wesentlicher Bedeutung, dass das Generatormoment mit deutlich höheren Werten eingestellt wird, als es aus dem unteren Teillastbereich bekannt ist.

Daher sieht es eine besonders vorteilhafte Ausgestaltung der Erfindung vor, die Einstellung des Generatormomentes ebenfalls blattwinkelabhängig vorzunehmen.

Besonders einfach ist hierbei der Ansatz, die für den Teillastbereich definierte Funktion, z.B. Tabelle oder mathematischer Zusammenhang auch der Regelung oberhalb der Rotorblattgrenzwinkels zugrunde zulegen, diese wird aber in Abhängigkeit vom Rotorblattwinkel mittels eines Korrekturwert dergestalt angepasst, dass die gewünschte sanfte und gleichmäßige Leistungsreduzierung erreicht wird.

Die Verwendung des Korrekturdrehmomentes bietet den Vorteil, dass beiden Teillastbereichen ein universeller Regler zugrunde gelegt wird. Da die Blattwinkel im unteren Teillastbereich immer nahe Null Grad sind, kommt die blattwinkelabhängige Korrektur dort nicht zum Tragen. Die nachfolgende Tabelle 1 zeigt beispielhaft die Korrektur des Drehmomentes für eine 5MW-Anlage mit einer Nenndrehzahl von 1170 rpm und einem Nennmoment von ca. 44900Nm.

**Tabelle 1: Drehzahlvorgabe Korrektur der Drehmomentes für eine 5 MW-Anlage**

| | | | | | | | |
|---|---|---|---|---|---|---|---|
| **Rotorblattwinkel [deg]** | 23 | 25 | 30 | 30.5 | 33 | 40 | 50 |
| **obere Soll-Drehzahlgrenze [rpm]** | 1180 | 1160 | 1060 | 1050 | 1000 | 880 | 760 |
| **Korrektur Drehmoment [Nm]** | 0 | 0 | 15000 | 14500 | 10000 | 5000 | 5000 |

Wie der Tabelle zu entnehmen ist, findet bis zum Erreichen des Rotorblattgrenzwinkels, der hier bei 25deg liegt keine Drehmomentenkorrektur statt. Bei Überschreiten des Rotorblattgrenzwinkels z. B. ab einem Rotorblattwinkel von 30deg erfolgt dann eine entsprechende Anpassung mittels der Drehmomentenkorrekturwerte.

Die zweite Tabellenzeile zeigt die blattwinkelabhängige Drehzahlvorgabe, die in Form einer oberen Begrenzung der Solldrehzahl vorgenommen wird. Hierbei hat es sich als besonders vorteilhaft erwiesen, den Eingriff des Drehzahlbegrenzers besonders weich auszuführen, indem bei einem Blattwinkel von 23deg eine Drehzahlgrenze vorgegeben wird, die knapp oberhalb der Nenndrehzahl der Beispielanlage liegt. Zwischen den Stützstellen wird interpoliert, im einfachsten Fall linear, vorzugsweise aber mit Interpolationen höherer Ordnung. Eine Interpolation kann selbstverständlich bei allen Tabellenwerten vorgenommen werden.

Besonders vorteilhaft ist die Eingabe der oben gezeigten Tabelle in die Steuerung in Relativwerten statt der dargestellten Absolutwerte, da das Verhalten dann im wesentlichen auf Anlagen anderer Größe übertragbar ist.

Bei höherentwickelten Steuerungssystemen wird das Generatormoment häufig dynamisch geregelt, wobei die Rotordrehzahl als Eingangssignal für z.B. einen PID-Regler genutzt wird. Die für den unteren Teillastbereich erforderliche optimale Drehzahlkennlinie wird häufig durch Begrenzungen des PID- oder auch PI-Reglers realisiert. Die erfindungsgemäße Regelung sieht auch in diesem Fall eine blattwinkelabhängige Begrenzung des Reglers vor, um das gewünschte Drehmomentverhalten zu realisieren.

Je nach den zur Verfügung stehenden Stellgrößen kann gemäß einer weiteren vorteilhaften Ausgestaltung der Erfindung anstatt des Generatormomentes auch vorteilhaft die Leistungsabgabe in Abhängigkeit von der Rotordrehzahl eingestellt werden, wobei sie gemäß einer weiteren vorteilhaften Ausgestaltung der Erfindung mit abnehmender Rotordrehzahl reduziert werden kann.

Wie bei der Diskussion des Standes der Technik bereits erwähnt, sind die aus dem Stand der Technik bekannten Regelalgorithmen, die in Abhängigkeit von der Windgeschwindigkeit regeln, insbesondere bei hohen Windgeschwindigkeiten sehr schwingungsanfällig gemäß einer vorteilhaften Ausgestaltung der Erfindung ist daher vorgesehen, dass oberhalb des Rotorblattgrenzwinkels Regelparameter gegenüber dem Normalbetrieb der Anlage durch eine blattwinkelabhängige Anpassung so verändert werden, dass die Regelstabilität im oberen Teillastbereich erhalten bleibt.

Dieser Anpassung liegt die Erkenntnis zugrunde, dass sich die Anforderungen an den Regler bei hohen Windgeschwindigkeiten verändern. Betrachtet man zum Beispiel eine richtlinienkonforme extreme Betriebsböe, welche die Windgeschwindigkeit um 9m/s ansteigen lässt, so beinhaltet diese gleichgroße Windgeschwindigkeitsänderung eine 24% höhere Änderung des Energiegehaltes, wenn sie bei einem mittleren Wind von 32m/s gegenüber 25m/s stattfindet. Diese vergrößerten Energieschwankungen verursachen zum Beispiel stärkere Drehzahlschwankungen, als sie im Normalbetrieb auftreten. Würde man auf diese verstärkten Drehzahlschwankungen mit einer ebenso großen Blattwinkelveränderung reagieren wie im Nennleistungsbetrieb, würde die Maschine durch die Überreaktion zu Schwingungen angeregt. Weiterhin ist es seit langem bekannt, dass sich mit zunehmendem Blattwinkel die Abhängigkeit der Änderung des Rotordrehmomentes von der Änderung des Blattwinkels (Sensitivität) erhöht. Beide Effekte verstärken sich und führen zu der Anforderung, die Pitchverstärkung blattwinkelabhängig über das aus dem Normalbetrieb bekannte Maß hinaus zu reduzieren.

So kann gemäß einer weiteren vorteilhaften Ausgestaltung der Erfindung vorgesehen werden, die sogenannte Pitchverstärkung bei Blattwinkeln über 30 deg auf unter 20% der Nennverstärkung, d. h. der Pitchverstärkung bei Nennwind zu reduzieren. Die Pitchverstärkung ist ein Regelparameter, welcher die Abhängigkeit der durchzuführenden Blattwinkelveränderung von der aktuellen Drehzahlabweichung skaliert. Bei einem einfachen Proportionalregler handelt es sich um den Proportionalfaktor zwischen Regelabweichung und Stellwertänderung, d.h. im konkreten Fall der Drehzahlregelung mittels Blattwinkelverstellung wird die Blattwinkelverstellung aus der Multiplikation der Drehzahlabweichung mit der Pitchverstärkung errechnet. (Real sind die Verhältnisse etwas komplexer, da es sich nicht um einen reinen P-Regler, sondern um einen PID-Regler handelt, aber auch die Verstärkungen des Integral- und Differenzialanteils werden durch die Pitchverstärkung skaliert.)

Es wird also vorgeschlagen, dass die Pitchverstärkung bei den hohen Blattwinkeln weniger als ein Fünftel der Pitchverstärkung bei Nennwind beträgt, da sich in Simulationsrechnungen herausgestellt hat, dass sich dadurch die erwähnten Regelungsinstabilitäten, wie z. B. Schwingungen beseitigen lassen.

Aus den oben genannten Gründen ist es standort- und anlagenabhängig von Vorteil, neben der Pitchverstärkung auch andere Regelparameter, wie z.B. zulässige Grenzwerte für den zulässigen Drehzahlbereich oder für die Pitchraten blattwinkelabhängig zu reduzieren oder zu vergrößern.

Weiterhin betrifft die vorliegende Erfindung auch eine Windenergieanlage mit einem Rotorblatt, das in einem einstellbaren Rotorblattwinkel zu dem Rotor angeordnet ist, wobei erfindungsgemäß die Windenergieanlage nach einem Verfahren gemäß den Ansprüchen 1 bis 16 betreibbar ist.

Im folgenden soll die Erfindung anhand von mehreren Abbildungen näher erläutert werden. Es zeigen:
- Fig. 1:: eine schematische Darstellung einer Leistungs- und einer Drehzahlkennlinie mit einem unteren Teillastbereich UB und einem Nennleistungsbereich NB,
- Fig. 2:: eine schematische Darstellung einer Leistungs- und einer Drehzahlkennlinie mit einem unteren Teillastbereich UB, einem Nennleistungsbereich NB und einem oberen Teillastbereich OB,
- Fig. 3:: eine schematische Darstellung einer Leistungs-, einer Dreh- moment- und einer Drehzahlkennlinie in Abhängigkeit vom Ro- torblattwinkel,
- Fig. 4:: Diagramm mit aufgezeichneten Rotorblattwinkeln in Abhängig- keit von der Windgeschwindigkeit,
- Fig. 5:: Diagramm mit simulierten Messdaten der Generatordrehzahl in Abhängigkeit vom Rotorblattwinkel und in Abhängigkeit von der Windgeschwindigkeit,
- Fig. 6:: eine Drehzahl-Blattwinkel-Kennlinie für eine Windenergieanla- ge,
- Fig. 7:: eine Umrichterkennlinie,
- Fig. 8:: Diagramm: Auftragung Drehmoment/Drehzahl in Abhängigkeit vom Rotorblattwinkel.

Die Fig. 1 ist bereits bei der Diskussion des Standes der Technik erläutert wurden und soll daher an dieser Stelle nicht noch einmal diskutiert werden.

Auch die Fig. 2 wurde bereits im Stand der Technik erläutert, so dass an dieser Stelle nur noch einige Ergänzungen gemacht werden sollen.

Die Fig. 2 zeigt im unteren Teillastbereich UB in durchgezogenen ausgeführter Linie eine Drehzahlkennlinie, wie sie bei einem begrenzt vorgegebenen Drehzahlbereich zwischen Ωᵤ und Ω_{N} zu einem optimalen Energieertrag führt. Die Regelung der Drehzahl erfolgt üblicherweise durch einen auf das Generatordrehmoment wirkenden PI- oder PID-Regler, bei dem zur Erzielung der Drehzahlrampe für den Betrieb bei einer optimalen Schnelllaufzahl das Drehmoment drehzahlabhängig begrenzt wird. Alternativ kann, wie oben erwähnt, zur Erzielung eines besonders einfachen Regelalgorithmus, auch eine einfache Drehzahl-Drehmomentenabhängigkeit, z.B. in Form einer Tabellenfunktion, festgelegt werden. Eine solche feste Drehzahl-Drehmomentenkennlinie würde beispielweise zu dem gestrichelt eingezeichneten Drehzahlverlauf führen. Die waagerechten Plateaus müssen durch flache Rampen ersetzt werden, da sonst kein eindeutiger und umkehrbarer Zusammenhang für eine Tabellenfunktion besteht. Die ganz zu Beginn der Drehzahlkennlinie erkennbare steile Rampe dient beispielsweise der Vermeidung einer Turmresonanz und liegt im gezeigten Beispiel unterhalb der Einschaltgeschwindigkeit v_{E}. Eine derartige steile Rampe kann aber auch durchaus im Normalbetrieb vorgesehen sein.

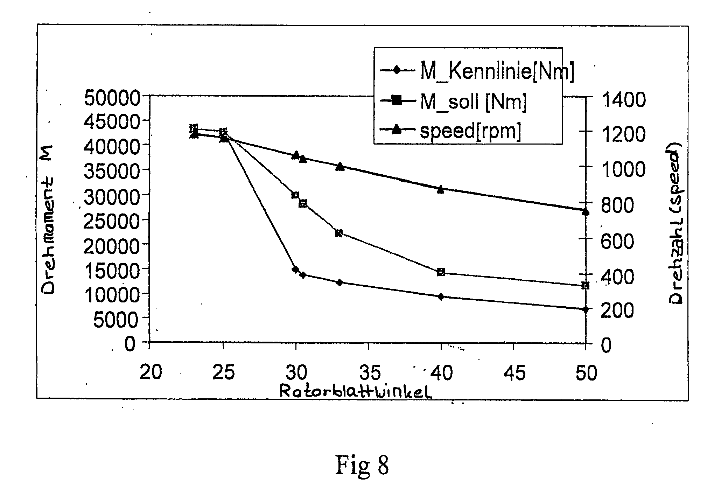

Da sich nach den physikalischen Grundgleichungen Leistung aus dem Produkt von Drehzahl und Drehmoment bestimmen lässt, ist schon in Fig. 2 erkennbar, dass der für den unteren Teillastbereich UB geltende Drehzahl-Drehmoment-Zusammenhang im oberen Teillastbereich OB modifiziert werden muss, da dort bei gleicher Drehzahl eine höhere Leistung erzielt wird. Auf diesen Zusammenhang wird bei der Diskussion der Fig 8 weiter eingegangen.

Figur 3 zeigt eine Leistungs- und eine Drehzahl- und Momentenkennlinie in Abhängigkeit vom Rotorblattwinkel υ. Wie bereits bei der Diskussion des Standes der Technik erläutert, wird der Rotorblattwinkel im unteren Teillastbereich im wesentlichen konstant, bei nahezu 0deg gehalten. Mit Erreichen der Nennleistung beginnt der Nennleistungsbereich OB und der Rotorblattwinkel wird dergestalt verändert, dass die Anlage bei Nennleistung, Nennmoment und Nennleistungsdrehzahl betrieben wird. Mit Erreichen eines Rotorblattgrenzwinkels υ_{Grenz} beginnt eine sanfte Reduzierung der Drehzahl Ω, des Drehmomentes M und somit auch der Leistung P, wobei erfindungsgemäß abhängig von der Vergrößerung des Blattwinkels Drehzahl und Moment bzw. Leistung vorgegeben werden. Drehzahl, Drehmoment und Leistung sind relativ dargestellt und können daher auch in dieser Form in einer Tabelle in der Steuerung hinterlegt sein.

Die Fig 4 ist bereits bei der Beschreibung der Vorteile der Erfindung erläutert wurden und soll daher an dieser Stelle ebenfalls nicht noch einmal diskutiert werden.

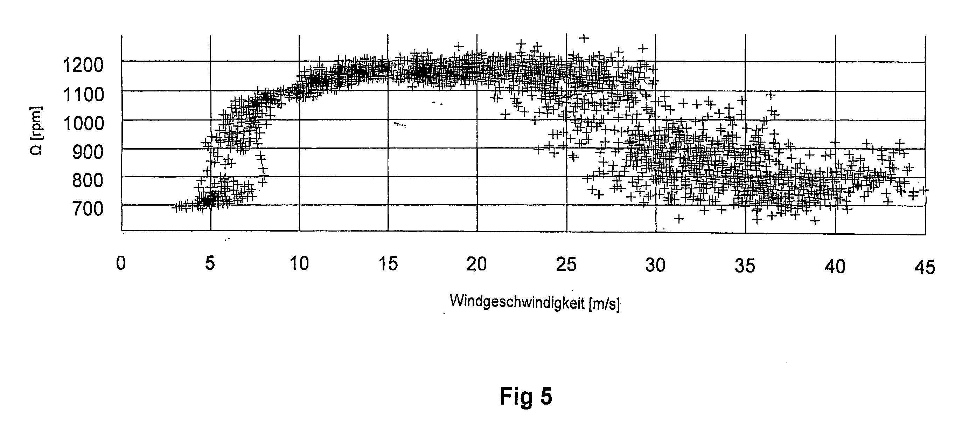

Die Fig 5 zeigt die Auftragung einer Vielzahl aufgezeichneter Generatordrehzahlen Ω die durch Simulationsrechnungen für eine 5 MW-Anlage über die Windgeschwindigkeit ermittelt wurden. Da der Algorithmus zur Ermittlung der Drehzahlvorgabe wie oben beschrieben mit dem gleitenden 15sec-Mittelwert des Blattwinkels arbeitet, wurde zur Herstellung der Vergleichbarkeit auch die Windgeschwindigkeit einer gleitenden 15 sec-Mittelwertbildung unterzogen.

Die Auftragung der Drehzahl über der Windgeschwindigkeit zeigt in sehr anschaulicher Weise, dass die Drehzahl und somit auch die Leistung nicht in Abhängigkeit der Windgeschwindigkeit reduziert wird, sondern in Abhängigkeit von dem Rotorblattwinkel, welcher, wie bereits in Fig. 4 dargestellt ist, nicht in einem eindeutigen Zusammenhang mit der Windgeschwindigkeit steht.

Fig. 5 zeigt, dass bei dem erfindungsgemäßen Regelungsverfahren trotz 15sec-Mittelwertbildung einer Drehzahl von z. B. 900 rpm eine Windgeschwindigkeit zwischen 23 m/s und 44 m/s zugeordnet sein kann, bzw. umgekehrt einer Windgeschwindigkeit von z. B. 33m/s eine Drehzahl von 680 bis 1070 rpm, also der überwiegende Teil des Drehzahlgesamtbereiches der beispielhaften 5 Megawatt-Anlage, der etwa zwischen 650 und 1260 rpm liegt.

Simulationsrechnungen haben gezeigt, dass eben die Loslösung von der im Stand der Technik vorgeschlagenen Abhängigkeit von der Windgeschwindigkeit und die erfindungsgemäße Einführung des Blattwinkels als Reglereingang zur Drehzahl- und Leistungsreduzierung nicht nur das Regelverhalten verbessert, sondern wie beschrieben es überhaupt erst sinnvoll ermöglicht. Sinnvoll heißt hierbei, dass es sicher auch möglich ist, die Leistungsreduzierung abhängig von der Windgeschwindigkeit durchzuführen, dass aber die Beherrschung der erwähnten Regelinstabilitäten und Zusatzbelastungen dieses Verfahren unwirtschaftlich gestalten würde.

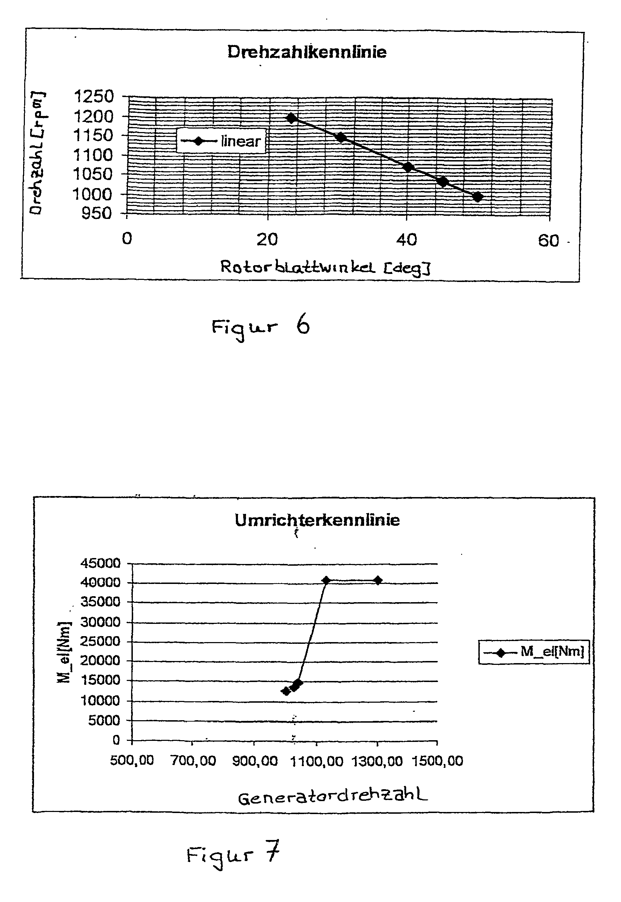

Fig. 6 zeigt ein Beispiel für eine Drehzahl - Blattwinkelkennlinie für eine Anlage mit einer Nenndrehzahl von 1170rpm. Im vorliegenden Fall soll ab einem Grenzblattwinkel von etwa 24 Grad mit der Drehzahlreduzierung begonnen werden. Bei etwa 50 Grad wird eine Drehzahl von 1000rpm erreicht. Im dargestellten Fall ist die Kennlinie linear vorgegeben. Je nach vorliegenden Belastungen oder gewünschtem Netzverhalten wird es in der Praxis vorteilhaft sein, nichtlineare, sowohl progressive als auch degressive Kennlinien vorzugeben.

Fig. 7 zeigt ein Beispiel für die Umrichterkennlinie. Aufgetragen ist das zulässige Generatormoment über der Generatordrehzahl. Soll der Energieertrag im leistungsreduzierten Betrieb maximiert werden, wird die Kennlinie möglichst "scharf" nachgefahren werden. Steht die Reduzierung der Triebstrangbelastungen (z.B. Getriebemoment) im Vordergrund, kann eine deutliche Unterschreitung der Kennlinie vorteilhaft sein, wobei natürlich weniger Energie in des Netz eingespeist wird. Eine Überschreitung der Umrichterkennlinie ist nur sehr kurzzeitig möglich, um den Umrichter nicht zu gefährden.

Fig. 8 zeigt die Auftragung der Generatordrehzahl (speed) und der Generatormomente abhängig vom Blattwinkel anhand der in Tabelle 1 gezeigten Werte. Mit M_Kennlinie ist der über dem Blattwinkel aufgetragene Verlauf der für den unteren Teillastbereich verwendeten Drehzahl-Drehmomentabhängigkeit bezeichnet, mit M_soll die Sollwertvorgabe nach dem erfindungsgemäßen Regelverfahren mit blattwinkelabhängiger Drehmomentenkorrektur. Die in Tabelle 1 angegebenen Drehmomentenkorrekturwerte sind in Form der Abweichung zwischen M_Kennlinie und M_soll dargestellt.

## Patentansprüche

1. Verfahren zur Regelung einer Windenergieanlage mit einem Rotor, der wenigstens ein Rotorblatt aufweist, das in einem einstellbaren Rotorblattwinkel zu dem Rotor angeordnet ist, bei dem der Rotor im, auf einen unteren Teillastbereich folgenden Nennleistungsbereich bis zum Erreichen eines definierten Grenzwertes mit einer im wesentlichen konstant gehaltenen Nennleistungsdrehzahl betrieben wird und bei Überschreiten des Grenzwertes in einem oberen Teillastbereich durch eine Reduzierung der Rotordrehzahl unterhalb der Nennleistungsdrehzahl betrieben wird, **dadurch gekennzeichnet, dass** ab dem Erreichen des Grenzwertes die Rotordrehzahl und über eine vorgebbare Sollfunktion der Sollwert der Rotordrehzahl in Abhängigkeit vom Rotorblattwinkel geregelt werden.

2. Verfahren nach Anspruch 1, **dadurch gekennzeichnet, dass** der Grenzwert ein definierter Rotorblattgrenzwinkel ist.

3. Verfahren nach Anspruch 1 oder 2, **dadurch gekennzeichnet, dass** der Rotorblattwinkel zur Einstellung der Rotordrehzahl oberhalb des Grenzwertes als zeitlicher und/oder örtlicher Mittelwert aus mehreren Rotorblattwinkeln gebildet wird.

4. Verfahren nach Anspruch 3, **dadurch gekennzeichnet, dass** der zeitliche Mittelwert einem gleitenden 10 sec- bis 60 sec-Mittelwert entspricht.

5. Verfahren nach Anspruch 4, **dadurch gekennzeichnet, dass** der zeitliche Mittelwert einem gleitenden 15 sec-Mittelwert entspricht.

6. Verfahren nach einem der Ansprüche 1 bis 5, **dadurch gekennzeichnet, dass** der Rotorblattwinkel der Windenergieanlage abhängig von gemessenen oder geschätzten Anlagenbelastungen geregelt wird.

7. Verfahren nach einem der Ansprüche 1 bis 6, **dadurch gekennzeichnet, dass** die Rotordrehzahl oberhalb des Grenzwertes mit zunehmendem Rotorblattwinkel reduziert wird.

8. Verfahren nach einem der Ansprüche 1 bis 7, **dadurch gekennzeichnet, dass** das Generatormoment des in der Windenergieanlage angeordneten Generators oberhalb des Grenzwertes in Abhängigkeit von der Rotordrehzahl eingestellt wird.

9. Verfahren nach Anspruch 8, **dadurch gekennzeichnet, dass** das Generatormoment mit abnehmender Rotordrehzahl reduziert wird.

10. Verfahren nach einem der Ansprüche 1 bis 9, **dadurch gekennzeichnet, dass** das Generatormoment in Abhängigkeit vom Rotorblattwinkel geregelt wird.

11. Verfahren nach Anspruch 10, **dadurch gekennzeichnet, dass** die Einstellung des Generatormomentes im oberen und optional auch im unteren Teillastbereich in Abhängigkeit der Rotordrehzahl und des Rotorblattwinkels erfolgt.

12. Verfahren nach einem der Ansprüche 1 bis 11, **dadurch gekennzeichnet, dass** die Leistungsabgabe der Windenergieanlage oberhalb des Grenzwertes in Abhängigkeit von der Rotordrehzahl eingestellt wird.

13. Verfahren nach Anspruch 12, **dadurch gekennzeichnet, dass** die Leistungsabgabe mit abnehmender Rotordrehzahl reduziert wird.

14. Verfahren nach einem der Ansprüche 1 bis 13, **dadurch gekennzeichnet, dass** oberhalb des Grenzwertes Regelparameter gegenüber dem Normalbetrieb der Anlage durch eine blattwinkelabhängige Anpassung so verändert werden, dass die Regelstabilität im oberen Teillastbereich erhalten bleibt.

15. Verfahren nach Anspruch 14, **dadurch gekennzeichnet, dass** ein Regelparameter die Pitchverstärkung ist.

16. Verfahren nach Anspruch 15, **dadurch gekennzeichnet, dass** die Pitchverstärkung bei Blattwinkeln über 30 deg weniger als 20 % der Nennverstärkung und/oder bei Blattwinkeln über 40 deg weniger als 16 % der Nennverstärkung beträgt.

17. Windenergieanlage mit einem Rotor, der wenigstens ein Rotorblatt aufweist, das in einem einstellbaren Rotorblattwinkel zu dem Rotor angeordnet ist, wobei der Rotor im, auf einen unteren Teillastbereich folgenden Nennleistungsbereich bis zum Erreichen eines definierten Grenzwertes mit einer im wesentlichen konstant gehaltenen Nennleistungsdrehzahl betrieben wird und bei Überschreiten des Grenzwertes in einem oberen Teillastbereich durch eine Reduzierung der Rotordrehzahl unterhalb der Nennleistungsdrehzahl betrieben wird, **dadurch gekennzeichnet, dass** ein Regler vorgesehen ist, der ab dem Erreichen des Grenzwertes die Rotordrehzahl und über eine vorgebbare Sollfunktion den Sollwert der Rotordrehzahl in Abhängigkeit vom Rotorblattwinkel regelt.

## Claims

1. A method of controlling a wind power plant with a rotor, which includes at least one rotor blade, which is arranged at an adjustable angle to the rotor, in which the rotor is operated in a rated power range following a lower partial load range until a defined threshold value is reached with a rated power speed, which is maintained substantially constant, and is operated, when the threshold value is exceeded, in an upper partial load range by a reduction in the rotor speed below the rated power speed, **characterised in that** after reaching the threshold value, the rotor speed and, by means of a pre-determinable set point function, the desired value of the rotor speed are controlled in dependence on the rotor blade angle.

2. A method as claimed in claim 1, **characterised in that** the threshold value is a defined rotor blade threshold angle.

3. A method as claimed in claim 1 or 2, **characterised in that** the rotor blade angle for adjusting the rotor speed above the threshold value is formed as a temporal and/or local mean value from a plurality of rotor blade angles.

4. A method as claimed in claim 3, **characterised in that** the temporal mean value corresponds to a sliding 10 sec to 60 sec mean value.

5. A method as claimed in claim 4, **characterised in that** the temporal mean value corresponds to a sliding 15 sec mean value.

6. A method as claimed in one of claims 1 to 5, **characterised in that** the rotor blade angle of the wind power plant is controlled in dependence on measured or estimated plant loadings.

7. A method as claimed in one of claims 1 to 6, **characterised in that** the rotor speed is reduced above the threshold value with an increasing rotor blade angle.

8. A method as claimed in one of claims 1 to 7, **characterised in that** the generator torque of the generator arranged in the wind power plant is adjusted above the threshold value in dependence on the rotor speed.

9. A method as claimed in claim 8, **characterised in that** the generator torque is reduced with decreasing rotor speed.

10. A method as claimed in one of claims 1 to 9, **characterised in that** the generator talk is controlled in dependence on the rotor blade angle.

11. A method as claimed in claim 10, **characterised in that** the adjustment of the generator torque in the upper, and optionally also lower, partial load region is effected in dependence on the rotor speed and the rotor blade angle.

12. A method as claimed in one of claims 1 to 11, **characterised in that** the power output of the wind energy plant is adjusted above the threshold value in dependence on the rotor speed.

13. A method as claimed in claim 12, **characterised in that** the power output is reduced with decreasing rotor speed.

14. A method as claimed in one of claims 1 to 13, **characterised in that** above the threshold value, control parameters of the plant are altered with respect to normal operation by adjustment dependent on blade angle so that control stability is retained in the upper partial load region.

15. A method as claimed in claim 14, **characterised in that** one control parameter is the increase in pitch.

16. A method as claimed in claim 15, characterise in that the increase in pitch at blade angles over 30 degrees is smaller than 20% of the nominal increase and/or at blade angles over 40 degrees is less than 16% of the nominal increase.

17. A wind power plant including a rotor, which includes at least one rotor blade, which is arranged at an adjustable angle to the rotor, wherein the rotor is operated in a rated power range following a lower partial load range until a defined threshold value is reached with a rated power speed, which is maintained substantially constant, and is operated, when the threshold value is exceeded, in an upper partial load range by a reduction in the rotor speed below the rated power speed, **characterised in that** a controller is provided, which, after reaching the threshold value, controls the rotor speed and, by means of a pre-determinable set point function, the desired value of the rotor speed in dependence on the rotor blade angle.

## Revendications

1. Procédé de régulation d'une centrale éolienne, comprenant un rotor qui présente au moins une pale de rotor qui est disposée sous un angle de pale de rotor réglable par rapport au rotor, dans lequel le rotor est exploité dans une plage de puissance nominale consécutive à une zone de charge partielle inférieure, jusqu'à ce qu'une valeur limite définie soit atteinte, avec un nombre de tours de puissance nominale maintenu substantiellement constant, et en cas de dépassement de la valeur limite, exploité dans une plage de charge partielle supérieure par une réduction du nombre de tours de rotor au-dessous du nombre de tours de puissance nominale, **caractérisé en ce qu'**à partir du moment où la valeur limite du nombre de tours de rotor est atteinte, et par l'intermédiaire d'une fonction de consigne prédéfinissable, la valeur de consigne du nombre de tours de rotor est régulée en fonction de l'angle de pale de rotor.

2. Procédé selon la revendication 1, **caractérisé en ce que** la valeur limite est un angle limite de pale de rotor défini.

3. Procédé selon la revendication 1 ou 2, **caractérisé en ce que** l'angle de pale de rotor pour le réglage du nombre de tours de rotor au-dessus de la valeur limite est formé comme une moyenne temporelle et/ou spatiale à partir de plusieurs angles de pale de rotor.

4. Procédé selon la revendication 3, **caractérisé en ce que** la moyenne temporelle correspond à une moyenne mobile de 10 à 60 secondes.

5. Procédé selon la revendication 4, **caractérisé en ce que** la moyenne temporelle correspond à une moyenne mobile de 15 secondes.

6. Procédé selon l'une quelconque des revendications 1 à 5, **caractérisé en ce que** l'angle de pale de rotor de la centrale éolienne est régulé en fonction des charges de la centrale, mesurées ou estimées.

7. Procédé selon l'une quelconque des revendications 1 à 6, **caractérisé en ce que** le nombre de tours de rotor au-dessus de la valeur limite est réduit lorsque l'angle de pale de rotor augmente.

8. Procédé selon l'une quelconque des revendications 1 à 7, **caractérisé en ce que** le moment de générateur du générateur disposé dans la centrale éolienne est réglé au-dessus de la valeur limite en fonction du nombre de tours de rotor.

9. Procédé selon la revendication 8, **caractérisé en ce que** le moment de générateur est réduit lorsque le nombre de tours de rotor diminue.

10. Procédé selon l'une quelconque des revendications 1 à 9, **caractérisé en ce que** le moment de générateur est régulé en fonction de l'angle de pale de rotor.

11. Procédé selon la revendication 10, **caractérisé en ce que** le réglage du moment de générateur s'effectue dans la plage de charge partielle supérieure, et en option également inférieure, en fonction du nombre de tours de rotor et de l'angle de pale de rotor.

12. Procédé selon l'une quelconque des revendications 1 à 11, **caractérisé en ce que** la puissance de sortie de la centrale éolienne est réglée au-dessus de la valeur limite en fonction du nombre de tours de rotor.

13. Procédé selon la revendication 12, **caractérisé en ce que** la puissance de sortie est réduite lorsque le nombre de tours de rotor diminue.

14. Procédé selon l'une quelconque des revendications 1 à 13, **caractérisé en ce qu'**au-dessus de la valeur limite, des paramètres de régulation sont modifiés par rapport au fonctionnement normal de la centrale par une adaptation en fonction de l'angle de pale de telle sorte que la stabilité de régulation est maintenue dans la plage de charge partielle supérieure.

15. Procédé selon la revendication 14, **caractérisé en ce qu'**un paramètre de régulation est le gain de pas.

16. Procédé selon la revendication 15, **caractérisé en ce que** le gain de pas pour des angles de pale de plus de 30 degrés est de moins de 20 % du gain nominal et/ou pour des angles de pale de plus de 40 degrés de moins de 16 % du gain nominal.

17. Centrale éolienne, comprenant un rotor qui présente au moins une pale de rotor qui est disposée sous un angle de pale de rotor réglable par rapport au rotor, dans laquelle le rotor est exploité dans une plage de puissance nominale consécutive à une zone de charge partielle inférieure, jusqu'à ce qu'une valeur limite définie soit atteinte, avec un nombre de tours de puissance nominale maintenu substantiellement constant, et en cas de dépassement de la valeur limite, exploité dans une plage de charge partielle supérieure par une réduction du nombre de tours de rotor au-dessous du nombre de tours de rotor de puissance nominale, **caractérisé en ce qu'**un régulateur est prévu qui régule à partir du moment où la valeur limite du nombre de tours de rotor est atteinte, et par l'intermédiaire d'une fonction de consigne prédéfinissable, la valeur de consigne du nombre de tours de rotor en fonction de l'angle de pale de rotor.
